# EUROPÄISCHE PATENTSCHRIFT

(11) **EP 1 495 796 B1**
(45) Veröffentlichungstag und Bekanntmachung des Hinweises auf die Patenterteilung: **20.09.2006**
(21) Anmeldenummer: 03405512.9
(22) Anmeldetag: 09.07.2003
(51) Int. Cl.: B01D 53/94, B01D 53/88, F01N 3/023

(54) **Verringerung der Stickstoffdioxid-emission bei kontinuierlich regenerierenden Russpartikelnfiltern**
Reduction of nitrogen dioxide emissions in a continuous regenerative filter for soot particles
Réduction des émissions de dioxyde d'azote dans un filtre pour particules de suie à régénération en continu

(43) Veröffentlichungstag der Anmeldung: 12.01.2005
(73) Patentinhaber: Hochschule Rapperswil, Institut für angewandte Umwelttechnik, 8640 Rapperswil (CH)
(72) Erfinder: Bunge, Rainer, 8057 Zürich (CH); Bürgler, Bernhard, 8620 Wetzikon (CH)

(56) Entgegenhaltungen:
- EP-A- 0 758 713
- EP-A- 0 916 389
- EP-A- 1 057 519
- EP-A- 1 217 196
- GB-A- 2 313 796
- PATENT ABSTRACTS OF JAPAN vol. 1997, no. 04, 30. April 1997 (1997-04-30) & JP 08 319820 A (HINO MOTORS LTD), 3. Dezember 1996 (1996-12-03)

## Beschreibung

Die Erfmdung fällt in das Gebiet der Abgasreinigung, insbesondere von Dieselmotoren. Sie betrifft ein Verfahren und eine Vorrichtung nach den Oberbegriffen der entsprechenden unabhängigen Patentansprüche. Verfahren und Vorrichtung dienen zur Verringerung der NO₂-Emission von kontinuierlich regenerierenden Partikelfiltern.

Kontinuierlich regenerierende Partikelfilter (CRPF) für Dieselmotoren sind weit verbreitet. Diese Filter bestehen aus einem Partikelfilter zur Abscheidung der Russpartikel (PM) und einem diesem vorgeschalteten Oxidationskatalysator. Das Rohabgas überströmt zunächst den Oxidationskatalysator, wo das im Rohabgas enthaltene NO (Stickstoffmonoxid) mit überschüssigem Sauerstoff zu NO₂ (Stickstoffdioxid) oxidiert wird. Dieses NO₂ dient im nachgeschalteten Partikelfilter als Oxidationsmittel zur Verbrennung der dort angesammelten PM ("Regeneration"). Hierbei wird das NO₂ wieder zu NO reduziert.

Problematisch ist bei diesem Verfahren, dass ein so grosser NO₂ Überschuss gewählt werden muss, dass die Regeneration des Partikelfilters auch unter den ungünstigsten Bedingungen einwandfrei funktioniert. Solche ungünstigen Bedingungen stellen sich insbesondere ein bei:
- Abgastemperaturen deutlich unterhalb oder deutlich oberhalb ca. 300°C
- hohem Schwefelgehalt des Treibstoffes
- tiefem NOₓ/PM Verhältnis

NO₂ ist wesentlich gefährlicher als NO, denn NO₂ ist nicht nur selbst ein starkes Reizgas für die menschlichen Atemwege, sondern auch unmittelbar beteiligt an der Bildung von bodennahem Ozon. Insbesondere beim Einsatz in geschlossenen Räumen (z.B. im Tunnelbau), aber auch im Bereich von Innenstädten ist die durch CRPF verursachte zusätzliche Emission von NO₂ in hohem Masse unerwünscht.

Die Probleme sind branchenbekannt und hinreichend dokumentiert z.B. unter *www.dieselnet.com*/*tech*/*dpf_crt.html*. Stand der Technik sind folgende Lösungsansätze.

Eine Möglichkeit besteht darin den Schwefelgehalt der Treibstoffe so zu limitieren, dass die CRPF auf diesen Maximalgehalt an Schwefel abgestimmt werden können. Übersteigt der Schwefelgehalt jedoch den Grenzwert, regeneriert der Filter nicht mehr vollständig.

Das Problem der ungenügenden Regeneration bei Abgastemperaturen unterhalb oder oberhalb 300°C wird gemäss *JP 2002276337A2* (Nissan Motor) durch das Einbringen eines NO₂₋Speichermediums nach dem Oxidationskatalysator gelöst. Das Speichermedium wird bei optimaler Abgastemperatur mit NO₂ aufgeladen und gibt dieses bei nicht-optimaler Abgastemperatur wieder ab. Ein weiteres bekanntes Verfahren zur Vermeidung von Regenerationsproblemen bei zu tiefen Abgastemperaturen besteht darin dem Treibstoff Additive zuzusetzen, die die Verbrennungstemperatur der PM im Filter verringern. Diese Additive sind teuer und müssen dem Treibstoff vorgängig zugesetzt werden, unabhängig davon, ob die Abgastemperatur im Betrieb tatsächlich zu tief für eine ordnungsgemässe Regeneration ist. Analoge Ansätze gibt es durch Modifikation der Filteroberflächen mit geeigneten Katalysatorbeschichtungen, die eine Verringerung der Zündtemperatur für PM bewirken (z.B. unter *www.mining-technology.com*).

Eine grundsätzliche Möglichkeit besteht in der Nachschaltung eines SCR-Entstickungskatalysators hinter dem Partikelfilter, was den Vorteil hat, dass hier nicht nur das NO₂, sondern auch das NO zerstört wird. Solche Systeme sind aber technisch ausserordentlich aufwändig und bislang kaum verbreitet.

Aus der EP-A-1 057 519 ist eine Vorrichtung und ein Verfahren zur Reinigung von Dieselmotor-Abgasen bekannt, das als Alternative zu Systemen mit regenerierbaren Filtern darstellt. Bei dieser Vorrichtung zur Entfernung von Russ werden Honigwaben-Katalysatoren mit offenen Kanälen [0015] mit gegebenenfalls einer russbindenden Beschichtung [0024] benützt. Die Honigwaben-Katalysatoren sind dazu ausgelegt, selektiv Stickstoffoxide zu reduzieren, NO2 zu generieren, und Kohlenwasserstoffe, Kohlenmonoxid und Wasserstoff zu oxidieren. Zur Anpassung der abgastemperaturabhängigen Leistungsfähigkeit des Honigwaben-Katalysators werden zwei solche Katalysatoren in Serie geschaltet. Der erste davon wird daher mit heisseren Abgasen bestrichen als der zweite. Der erste kann mit einem Bypass umgangen werden, um die Verbrennung von Russ und die Reduktion des Stickstoffes zu verbessern.

Aus der EP-A-0 341832 ist indes eine Vorrichtung und ein Verfahren zur Behandlung von Dieselabgas bekannt, welche mit einem keramischen Russfilter arbeiten, dem ein Oxidationskatalysator vorgeschaltet ist. Bei der Vorrichtung kann ein Bypass vorgesehen sein, der den Oxidationskatalysator umgeht, so dass die Generierung von NO2 mit einem Stellglied lediglich periodisch zugeschaltet werden kann. Eine solche periodische Generierung des Oxidants könne bei einer Überproduktion von Sulfaten gewünscht sein.

Die Erfindung stellt sich zur Aufgabe, ein Verfahren und eine Vorrichtung zu schaffen, die es erlauben, die NO2-Emissionen von CRPF auf einfache und robuste Art und Weise zu reduzieren. Insbesondere sollen hierbei keine Treibstoffzusätze oder zusätzliche katalytische Beschichtungen notwendig sein.

Diese Aufgabe wird gelöst durch das Verfahren und die Vorrichtung, wie sie in den unabhängigen Patentansprüchen definiert sind.

Nach dem erfindungsgemässen Verfahren wird der CRPF mit einem Oxidationskatalysator ausgestattet, dessen vom Abgas überströmte Oberfläche variabel ist. Bei hohem NO₂-Bedarf wird die vom Abgas überströmte Katalysatoroberfläche, also die katalytisch aktive Oberfläche, vergrössert und bei niedrigem NO₂-Bedarf entsprechend verringert. Die Ausführung des Verfahrens wird anhand der Beschreibung der beispielhaften Ausführungsformen der erfindungsgemässen Vorrichtung deutlich.

Die erfindungsgemässe Vorrichtung besteht aus einem CRPF mit einem Oxidationskatalysator, gemäß dem Anspruch 1.

Das erfindungsgemässe Verfahren zeichnet sich dadurch aus, dass die NO₂-Emission eines CRPF auf einfache und robuste Art und Weise weitgehend vermieden werden kann, ohne dass ein Eingriff in die Chemie der Regeneration erforderlich ist (Treibstoffzusätze; zusätzliche Katalysatoren). Das System besteht in einer apparativ wenig aufwändigen Modifikation bestehender Technologie und kann auf bereits im Einsatz befindliche Fahrzeuge problemlos nachgerüstet werden. Das System ist besonders vorteilhaft in sensiblen Applikationen, z.B. im Tunnelbau oder im Innenstadtbereich.

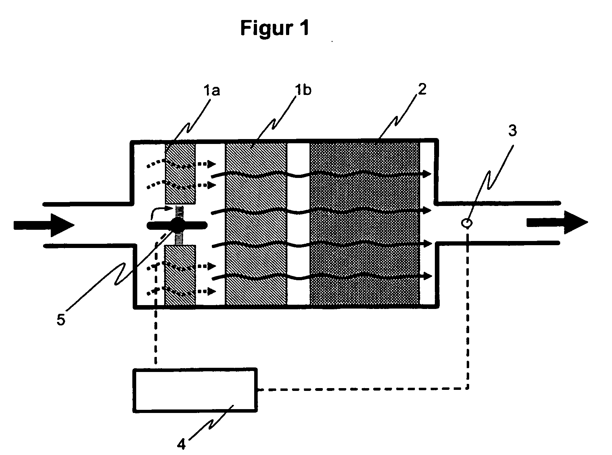

Die Ausführung der Erfindung wird anhand der Figur 1 beispielhaft skizziert. Diese Figur 1 zeigt einen CRPF mit einem zweiteiligen Oxidationskatalysator (1a, 1b), einem Partikelfilter (2), einem Sensor für NO₂ (3), einer elektronischen Datenverarbeitung (4), und einer Absperrklappe (5).

Der zweite Teil des Oxidationskatalysators (1b) ist so dimensioniert, dass dieser bei günstigen Betriebsbedingungen gerade ausreicht, um genügend NO₂ zur Regeneration des Partikelfilters zu erzeugen. Der erste Teil des Oxidationskatalysators (1a) ist hingen so dimensioniert, dass dieser zusammen mit dem zweiten Teil (1b) hinreichend viel NO₂ produziert, sodass auch bei ungünstigen Betriebszuständen eine vollständige Regeneration des Partikelfilters gewährleistet ist. Bei offener Klappe (5) wird der erste Teil des Oxidationskatalysators vom Rohgas praktisch nicht durchströmt (bypass-Betrieb), bei geschlossener Klappe werden beide Teile durchströmt, also die kombinierte Oberfläche beider Katalysatoren zur Oxidation verwendet. In der in Figur 1 dargestellten Vorrichtung wird die Klappe (5) durch eine elektronische Datenverarbeitung (4) angesteuert, wobei diese Datenverarbeitung mit dem Messignal aus dem Sensor (3) gespeist wird. In dieser bevorzugten Ausführungsform misst der Sensor (3) die NO₂-Konzentration im gereinigten Abgas. Der Sensor ist also dem Katalysator nachgeschaltet.

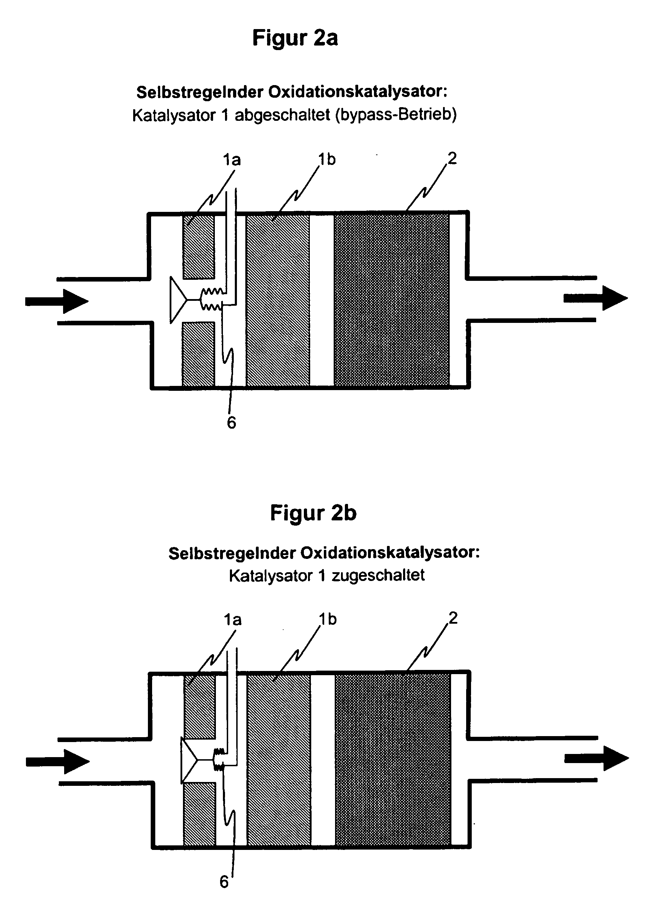

Eine weitere Ausführungsform besteht in einer Selbstregelung des Oxidationskatalysators, wie in Figur 2a/b skizziert. Der erste Teil des Oxidationskatalysators (1a) wird in diesem Fall mit einem Absperrorgan (6) versehen, das von einer Druckdifferenz zwischen dem Abgas vor dem Partikelfilter (2) und nach dem Partikelfilter (also dem Umgebungsdruck), angesteuert wird. Im Normalbetrieb ist das Absperrorgan (6) offen (bypass-Betrieb). Bei verstopftem Partikelfilter hingegen steigt der Abgasgegendruck an und der erste Teil des Oxidationskatalysators (1a) wird durch schliessen der Bypass zugeschaltet.
Diese Ausführungsform eignet sich insbesondere für gleichförmig laufende Motoren, also solche mit wenigen Lastwechseln.

In weiteren beispielhaften Ausführungsformen des erfindungsgemässen Verfahrens kann die Stellung der Klappe geregelt ("closed-loop") oder gesteuert ("open-loop") werden.

Als Regelungskriterien ("closed-loop") kommen neben der NO₂-Konzentration solche Parameter als Messgrössen des Sensors (3) in Frage, die direkte oder indirekte Rückschlüsse auf den aktuellen NO₂-Bedarf zur Regeneration des Partikelfilters ermöglichen, z.B.
- Sauerstoffgehalt im Abgas vor dem Oxidationskatalysator
- Sauerstoffgehalt im Abgas hinter dem Partikelfilter
- Kohlenmonoxidgehalt vor und nach dem Partikelfilter
- Abgasgegendruck des Partikelfilters
- Temperatur des Abgases an verschiedenen Stellen im CRPF

Zur Steuerung der Klappe ("open-loop") wird in der einfachsten Ausführungsform eine Zeitschaltuhr verwendet, die in vorgegebenen Intervallen die Klappe öffnet bzw. schliesst. Modifiziert wird die Taktfrequenz beispielsweise anhand von Motorenkenndaten, wie Drehzahl, und/oder Treibstoffverbrauch und/oder Drehmoment.

## Patentansprüche

1. Verfahren zur Verringerung der NO₂ -Emission durch mit einem kontinuierlich regenerierenden Russpartikelfiltersystem (CRPF) gereinigtes Abgas, bei welchem Verfahren das Abgas zuerst eine Katalysatoroberfläche eines Oxidationskatalysators überströmt, wo NO₂ generiert wird, und danach einen Partikelfilter zur Abscheidung der Russpartikel durchströmt, welcher mittels des NO₂ regeneriert wird, **dadurch gekennzeichnet, dass** die vom Abgas überströmte Katalysatoroberfläche bei erhöhtem NO₂ -Bedarf zur Regeneration des Partikelfilters vergrössert wird.

2. Verfahren nach Anspruch 1 **dadurch gekennzeichnet, dass** eine minimal verfügbare Oberfläche des Oxidationskatalysators so dimensioniert ist, dass diese gerade ausreicht, um den Partikelfilter unter günstigen Betriebsbedingungen zu regenerieren und dass eine maximale Oberfläche des Oxidationskatalysators so dimensioniert ist, dass diese ausreicht, um den Partikelfilter unter ungünstigen Betriebsbedingungen zu regenerieren.

3. Verfahren nach einem der Ansprüche 1 oder 2 **dadurch gekennzeichnet, dass** die Grösse der vom Abgas überströmten Oberfläche des Oxidationskatalysators variiert wird aufgrund von Messparametern, die eine Berechnung oder eine Abschätzung eines aktuellen NO₂-Bedarfs zur Regeneration des Partikelfilters zulassen.

4. Verfahren nach Anspruch 3 **dadurch gekennzeichnet, dass** wenigstens einer der Messparameter aus folgender Gruppe stammt:
• NO₂-Konzentration an einer Stelle im Abgasstrang, insbesondere nach dem Partikelfilter
• NO -Konzentration an einer Stelle im Abgasstrang
• Sauerstoffkonzentration an einer Stelle im Abgasstrang
• Kohlenmonoxidkonzentration an einer Stelle im Abgasstrang
• Abgasgegendruck des Partikelfilters
• Temperatur des Abgases vor dem CRPF, in dem CRPF, oder hinter dem CRPF
• Motorenkenndaten wie Drehzahl, Treibstoffverbrauch oder Drehmoment.

5. Vorrichtung zur Verringerung der NO₂ -Emission durch mit einem kontinuierlich regenerierenden Russpartikelhltersystem (CRPF) gereinigtes Abgas, bei welcher Vorrichtung ein Oxidationskatalysator zur Generierung von NO₂ und, in Fliessrichtung des Abgases nach dem Oxidationskatalysator, ein mittels des NO₂ regenerierbarer Partikelfilter zum Abscheiden von Russpartikeln vorhanden ist, **dadurch gekennzeichnet, dass** durch ein Stellglied die Grösse der vom Gas überströmten Oberfläche des Oxidationskatalysators vergrösserbar ist.

6. Vorrichtung nach Anspruch 5 **dadurch gekennzeichnet, dass** der Oxidationskatalysator aus zwei in Serie geschalteten separaten Teilen besteht, wobei ein Teil mit einem durch das Stellglied regelbaren Bypass ausgestattet ist.

7. Vorrichtung nach Anspruch 6 **dadurch gekennzeichnet, dass** das Volumen des zuschaltbaren einen Teils kleiner ist, als das halbe Hubraumvolumen des Motors.

8. Vorrichtung nach einem der Ansprüche 5 bis 7 **dadurch gekennzeichnet, dass** sie Mittel zur Regelung des Stellglieds nach Massgabe von Messwerten von wenigstens einem im Abgasstrang befindlichen Sensor aufweist.

9. Vorrichtung nach Anspruch 8 **dadurch gekennzeichnet, dass** der Sensor zur Messung einer der folgenden Grössen ausgebildet ist:
• NO₂-Konzentration
• NO-Konzentration
• Sauerstoffkonzentration (z.B. mittels Lambda Sonde)
• Druck
• Temperatur.

10. Vorrichtung nach einem der Ansprüche 5 bis 7 **dadurch gekennzeichnet, dass** sie Mittel zur Steuerung des Stellglieds nach Massgabe von Motorenkenndaten wie Drehzahl, Treibstoffverbrauch oder Drehmoment aufweist.

## Claims

1. A method for reducing the NO₂-emission by way of exhaust gas purified with a continuously regenerating soot particle filter system (CRPF), with which method the exhaust gas firstly flows over a catalyser surface of an oxidation catalyser, where NO₂ is generated, and thereafter flows through a particle filter for separating off the soot particles, which is regenerated by way of the NO₂, **characterised in that** the catalyser surface over which the exhaust gas flows is increased with an increased NO₂-requirement for regeneration of the particle filter.

2. A method according to claim 1, **characterised in that** a minimal available surface of the oxidation catalyser is dimensioned such that this is just sufficient in order to regenerate the particle filter under favourable operating conditions, and that a maximal surface of the oxidation catalyser is dimensioned such that this is sufficient, in order to regenerate the particle filter under unfavourable operating conditions.

3. A method according to one of the claims 1 or 2, **characterised in that** the size of the surface of the oxidation catalyser over which the exhaust gas flows is varied on account of measurement parameters, which permit a computation or an estimation of a current NO₂₋requirement for regeneration of the particle filter.

4. A method according to claim 3, **characterised in that** at least one of the measurement parameters comes from the following group:
• NO₂-concentration at a location in the exhaust gas line, in particular downstream of the particle filter
• NO-concentration at a location in the exhaust gas line
• oxygen concentration at a location in the exhaust gas line
• carbon monoxide concentration at a location in the exhaust gas line
• exhaust gas counter-pressure of the particle filter
• temperature of the exhaust gas upstream of the CRPF, in the CRPF or downstream of the CRPF
• motor characteristic data such as rotational speed, fuel consumption or torque

5. A device for reducing the NO₂-emission by way of exhaust gas purified with a continuously regenerating soot particle filter system (CRPF), with which device an oxidation catalyser for generating NO₂ is present, and downstream of the oxidation catalyser in the flow direction of the exhaust gas, a particle filter capable of being regenerated by way of NO₂, for separating off soot particles, **characterised in that** the size of the surface of the oxidation catalyser over which the gas flows may be increased by way of an actuator.

6. A device according to claim 5, **characterised in that** the oxidation catalyser consists of two separate parts connected in series, wherein one part is provided with a bypass which may be controlled with a closed loop by way of the actuator.

7. A device according to claim 6, **characterised in that** the volume of the connectable one part is smaller than half the of piston swept volume of the motor.

8. A device according to one of the claims 5 to 7, **characterised in that** it comprises means for the closed loop control of the actuator in accordance with readings of at least one sensor located in the exhaust gas line.

9. A device according to claim 8, **characterised in that** the sensor is designed for measurement of one of the following variables
• NO₂-concentration
• NO-concentration
• oxygen concentration (by way of Lambda probe)
• pressure
• temperature

10. A device according to one of the claims 5 to 7, **characterised in that** it comprises means for the control of the actuator in accordance with motor characteristic data such as rotational speed, field consumption or torque.

## Revendications

1. Procédé de réduction de l'émission de NO₂ par gaz d'échappement purifiés avec système de filtre pour particules de suie à régénération continue (CRPF), procédé dans lequel les gaz d'échappement submergent une surface d'un catalyseur d'oxydation où le NO₂ est généré, puis traversent un filtre à particules pour séparer les particules de suie, lequel est régénéré à l'aide de NO₂, **caractérisé en ce que** la surface du catalyseur submergé par des gaz d'échappement s'agrandit en cas de besoin accru en NO2 pour régénérer le filtre à particules.

2. Procédé selon la revendication 1, **caractérisé en ce qu'**une surface minimale disponible du catalyseur d'oxydation est dimensionnée de manière à être juste suffisante pour régénérer le filtre à particules dans des conditions de fonctionnement favorables et **en ce qu'**une surface maximale du catalyseur d'oxydation est dimensionnée de manière à être suffisante pour régénérer le filtre à particules dans des conditions de fonctionnement défavorables.

3. Procédé selon l'une quelconque des revendications 1 ou 2, **caractérisé en ce que** la dimension de la surface du catalyseur d'oxydation submergée par les gaz d'échappement peut varier en fonction de paramètres de mesure qui permettent un calcul ou une estimation d'un besoin en NO₂ du moment pour régénérer le filtre à particules.

4. Procédé selon la revendication 3, **caractérisé en ce qu'**au moins l'un des paramètres de mesure provient du groupe suivant :
• concentration en NO₂ en un point du système d'échappement, en particulier après le filtre à particules,
• Concentration en NO en un point du système d'échappement,
• Concentration en oxygène en un point du système d'échappement,
• Concentration en monoxyde de carbone en un point du système de d'échappement,
• Contre-pression des gaz d'échappement du filtre à particules,
• Température des gaz d'échappement avant le CRPF, dans le CRPF et après le CRPF,
• Caractéristiques moteur comme vitesse de rotation, consommation de carburant et couple de rotation.

5. Dispositif de réduction de l'émission de NO₂ par gaz d'échappement purifiés avec système de filtre pour particules de suie à régénération continue (CRPF), dispositif dans lequel se trouvent un catalyseur d'oxydation pour la génération de NO₂ et, dans le sens d'écoulement des gaz d'échappement après le catalyseur d'oxydation, un filtre à particules pouvant être régénéré à l'aide du NO₂ pour la séparation des particules de suie, **caractérisé en ce qu'**un actuateur permet d'agrandir la dimension de la surface, pouvant être submergée par les gaz, du catalyseur d'oxydation.

6. Dispositif selon la revendication 5, **caractérisé en ce que** le catalyseur d'oxydation est constitué de deux parties séparées commutées en série, une partie étant équipée d'un by-pass pouvant être réglé par l'actuateur.

7. Dispositif selon la revendication 6, **caractérisé en ce que** le volume de la partie commutable est inférieur à la moitié de la cylindrée du moteur.

8. Dispositif selon l'une quelconque des revendications 5 à 7, **caractérisé en ce qu'**il présente des moyens permettant le réglage de l'actuateur conformément aux relevés de mesure d'au moins un capteur se trouvant dans le système d'échappement.

9. Dispositif selon la revendication 8, **caractérisé en ce que** le capteur est conçu pour mesurer l'une des grandeurs suivantes :
• Concentration en NO₂,
• Concentration en NO,
• Concentration en oxygène (par exemple au moyen d'une sonde lambda),
• Pression,
• Température.

10. Dispositif selon l'une quelconque des revendications 5 à 7, **caractérisé en ce qu'**il présente des moyens pour la commande de l'actuateur conformément aux caractéristiques moteur comme la vitesse de rotation, la consommation de carburant ou le couple de rotation.
